# EUROPÄISCHE PATENTSCHRIFT

(11) **EP 3 088 756 B1**
(45) Veröffentlichungstag und Bekanntmachung des Hinweises auf die Patenterteilung: **16.08.2017**
(21) Anmeldenummer: 15001279.7
(22) Anmeldetag: 30.04.2015
(51) Int. Cl.: F16D 3/68, F16D 3/74, F16D 3/78

(54) **KLAUENKUPPLUNG**
CLAW COUPLING
EMBRAYAGE À GRIFFES

(43) Veröffentlichungstag der Anmeldung: 02.11.2016
(73) Patentinhaber: Siemens Aktiengesellschaft, 80333 München (DE)
(72) Erfinder: Kleinewegen, Stefan, 46395 Bocholt (DE)

(56) Entgegenhaltungen:
- DE-A1- 2 153 411
- DE-A1- 2 706 034
- DE-A1- 19 919 696
- DE-U- 6 930 649

## Beschreibung

Die vorliegende Erfindung betrifft eine Klauenkupplung umfassend zwei axial einander gegenüber angeordnete Kupplungselemente, die einander zugewandte Stirnflächen aufweisen, von denen jeweils wechselweise ineinander greifende Klauen vorstehen, die auf einander entsprechenden Kreisringen angeordnet sind und einander zugewandte, konkav gekrümmte Klauenflächen aufweisen, wobei die Krümmung der Klauenflächen jeweils einer ersten Kreisbahn mit einem ersten Radius folgt, und eine zwischen den Kupplungselementen angeordnete, aus elastischem Material hergestellte Druckkörperanordnung mit einem Ringelement sowie radial auswärts von dem Ringelement vorstehenden Druckkörpern, die jeweils zwischen einer Klaue des ersten Kupplungselementes und einer Klaue des zweiten Kupplungselementes aufgenommen sind und konvex gekrümmte Druckkörperflächen aufweisen, die während einer Drehmomentübertragung mit Klauenflächen der Klauen in Eingriff sind, wobei die Krümmung der Druckkörperflächen jeweils einer zweiten Kreisbahn mit einem zweiten Radius folgt, der kleiner ist als der erste Radius der ersten Kreisbahn.

Klauenkupplungen der eingangs genannten Art sind im Stand der Technik in unterschiedlichsten Ausgestaltungen bekannt. Sie dienen dazu, ein Drehmoment zwischen zwei miteinander fluchtenden Wellen zu übertragen, wie beispielsweise zwischen einer Motorwelle und einer Getriebewelle. Während des Betriebs verdrehen sich die beiden Kupplungselemente relativ zueinander entsprechend dem anliegenden Drehmoment und der Steifigkeit des elastischen Materials der Druckkörperanordnung. Dabei vollzieht auch jede Klaue der Kupplungselemente eine Drehbewegung, wobei sich ein radial weiter außen angeordneter Punkt einer konkav gekrümmten Klauenfläche auf einer größeren Kreisbahn als ein weiter innen liegender Punkt auf der konkav gekrümmten Klauenfläche bewegt und damit einen größeren Weg zurücklegt. Dies führt bei Klauenkupplungen, bei denen die Klauenflächen und die Druckkörperflächen einander entsprechende Wölbungen aufweisen, dazu, dass jeder Druckkörper außen mehr zusammengepresst wird als innen, was eine ungleichförmige Pressungsverteilung nach sich zieht, bei der radial außen eine höhere Kantenpressung wirkt. Entsprechend werden die Druckkörper während des Betriebs der Klauenkupplung radial einwärts gedrückt, was häufig eine erhebliche Verformung der Druckkörperanordnung nach sich zieht, von der insbesondere das Ringelement betroffen ist.

Um derartige Verformungen einer Druckkörperanordnung zu verhindern, ist es zum einen bekannt, das maximal zulässige Drehmoment einer Klauenkupplung zu begrenzen. Auf diese Weise kann verhindert werden, dass unzulässig hohe radial einwärts gerichtete Kräfte auf die Druckkörper wirken, wodurch einer Verformung der Druckkörperanordnung effektiv entgegengewirkt werden kann. Das maximal zulässige Drehmoment ist hier allerdings meist sehr niedrig anzusetzen, was in vielen Fällen nicht wünschenswert ist. Zum anderen ist es bekannt, das Ringelement der Druckkörperanordnung durch eine Kreisscheibe zu ersetzen, um der Druckkörperanordnung eine höhere Steifigkeit zu verleihen. Bei einer derartigen Ausgestaltung einer Druckkörperanordnung kann dann eine Welle jedoch nicht mehr in die Kupplung ragen, was eine konstruktive Einschränkung darstellt. Ein weiterer Ansatz besteht darin, die Krümmungen der Klauenflächen und Druckkörperflächen derart zu wählen, dass beide Krümmungen jeweils einer Kreisbahn folgen, wobei der Radius der Kreisbahn der Krümmungen der Druckkörperflächen geringer ist als derjenige der Klauenflächen. Dies führt dazu, dass die Größe der Kontaktfläche zwischen einer Druckkörperfläche und einer zugeordneten Klauenfläche in Abhängigkeit von dem von der Klauenkupplung übertragenen Drehmoment variiert. Entsprechend lässt sich die auf die Druckkörper wirkende Kantenpressung durch geeignete Wahl der Krümmungsradien der Klauen- und Druckkörperflächen bezogen auf ein zu übertragendes Nenn-Drehmoment der Klauenkupplung derart justieren, dass bei dem Nenn-Drehmoment verhältnismäßig geringe radial einwärts gerichtete Kräfte auf das Ringelement wirken.

Ein Problem dieses Ansatzes besteht allerdings darin, dass eine geeignete Wahl der jeweiligen Krümmungsradien stets mit einer Reihe von individuellen Berechnungen und/oder Versuchen einhergeht, was mit sehr viel Aufwand und hohen Kosten verbunden ist.

Ausgehend von diesem Stand der Technik ist es eine Aufgabe der vorliegenden Erfindung, eine Klauenkupplung der eingangs genannten Art mit alternativem Aufbau zu schaffen.

Zur Lösung dieser Aufgabe schafft die vorliegende Erfindung eine Klauenkupplung der eingangs genannten Art, die dadurch gekennzeichnet ist, dass jeweils der Radius der ersten Kreisbahn einer Klauenfläche und der Radius der zweiten Kreisbahn einer mit dieser Klauenfläche in Eingriff stehenden Druckkörperfläche am radial innersten Punkt der Klauenfläche einander tangieren, und dass dieser radial innerste Punkt der Klauenfläche auf einer gemeinsamen Geraden mit dem Mittelpunkt der ersten Kreisbahn und dem Mittelpunkt der zweiten Kreisbahn angeordnet ist. Untersuchungen haben ergeben, dass diese spezifischen geometrischen Parameter stets zu einer optimierten Kraftverteilung an den einzelnen Druckkörpern der Druckkörperanordnung im Nenn-Drehmomentbereich der Klauenkupplung führen, bei der sich die auf das Ringelement der Druckkörperanordnung radial ein- und auswärts wirkenden Radialkräfte zu großen Teilen gegen einander aufheben, wodurch im Nenn-Drehmomentbereich Verformungen des Ringelementes der Druckkörperanordnung verhindert werden. Darüber hinaus sind für eine Auslegung der Kupplungselemente und der Druckkörperanordnung nach Maßgabe dieser spezifischen geometrischen Parameter vorab keine umfangreichen Berechnungen und/oder Versuche durchzuführen, weshalb sich die erfindungsgemäße Klauenkupplung einfach und preiswert konstruieren und herstellen lässt.

Gemäß einer Ausgestaltung der vorliegenden Erfindung ist der Mittelpunkt der zweiten Kreisbahn auf einer radialen Mittellinie des Ringelements angeordnet, insbesondere im Kreuzungspunkt der radialen Mittellinie des Ringelementes und eines mittleren Teilkreises der Klauen. Der Radius des mittleren Teilkreises der Klauen ist dabei definiert als die Hälfte der Summe des Klaueninnen- und Klauenaußenradius. Mit einer derartigen Wahl des Mittelpunktes der zweiten Kreisbahn wurden besonders gute Ergebnisse erzielt.

Bevorzugt sind die Krümmungen von einander abgewandten Druckkörperflächen benachbarter Druckkörper auf einer gemeinsamen Kreisbahn angeordnet. Entsprechend lassen sich die Druckkörperflächen einfach und preiswert herstellen.

Vorteilhaft sind zumindest einige der Druckkörper mit wenigstens einem axial vorstehenden Abstandshalter versehen, wobei jeder Abstandshalter eine Anlagefläche aufweist, die bei Übertragung eines Drehmomentes mit einer Stirnfläche eines Kupplungselementes in Eingriff ist. Während einer Drehmomentübertragung von einem Kupplungselement zum anderen Kupplungselement werden die Druckkörper des Druckkörperringes derart verformt, dass sich die Stirnflächen der jeweiligen Druckkörper mit den an diesen angeordneten Abstandshaltern ausbauchen, bis die Anlageflächen der Abstandshalter bei Überschreitung eines vorbestimmten Drehmomentes mit den Stirnflächen der Kupplungselemente in Eingriff kommen. Bei weiterer Erhöhung des Drehmomentes werden die Anlageflächen dann gegen die Kontaktflächenbereiche gedrückt, wodurch Haftkräfte erzeugt werden, die ebenfalls radial einwärts auf das Ringelement der Druckkörperanordnung wirkenden Kräften entgegenwirken.

Bevorzugt ist jeder Druckkörper mit zumindest einem Abstandshalter versehen. Dies ist dahingehend von Vorteil, dass auftretende Kräfte gleichmäßig über die Druckkörperanordnung verteilt werden.

Gemäß einer Ausgestaltung der vorliegenden Erfindung stehen Abstandshalter benachbarter Druckkörper axial in entgegengesetzten Richtungen vor. Auch diese Ausgestaltung ist einer gleichmäßigen Kraftverteilung zuträglich.

Bevorzugt ist jeder Druckkörper mit zumindest zwei Abstandshaltern versehen, die in entgegengesetzten Richtungen vorstehen.

Gemäß einer Ausgestaltung der vorliegenden Erfindung handelt es sich bei den Klauenflächen um gießtechnisch hergestellte Flächen. Mit anderen Worten sind die Klauenflächen nicht mechanisch nachbearbeitet. Dies hat zum einen den Vorteil, dass die Herstellung der Kupplungselemente mit geringen Kosten einhergeht. Darüber hinaus werden bei einem Kontakt eines Druckkörpers mit einer gegossenen Klauenfläche größere Haftkräfte als bei dem Kontakt mit einer bearbeiteten Klauenfläche erzielt, was der Aufhebung radial einwärts wirkender Kräfte zuträglich ist.

Weitere Merkmale und Vorteile der vorliegenden Erfindung werden anhand der nachfolgenden Beschreibung einer Klauenkupplung gemäß einer Ausführungsform der vorliegenden Erfindung unter Bezugnahme auf die beiliegende Zeichnung deutlich. Darin ist
- Figur 1: eine perspektivische Ansicht einer Klauenkupplung gemäß einer Ausführungsform der vorliegenden Erfindung in teilweise montiertem Zustand;
- Figur 2: eine Seitenansicht eines Kupplungselementes der in Figur 1 dargestellten Klauenkupplung, an der ein Druckkörperring gehalten ist;
- Figur 3: eine perspektivische Teilansicht der in Figur 2 dargestellten Anordnung;
- Figur 4: eine Vorderansicht eines Teilbereiches der in Figur 2 dargestellten Anordnung; und
- Figur 5: ein Diagramm, das Pressungsverhältnisse an Druckkörperflächen während des Betriebs der in Figur 1 dargestellten Klauenkupplung zeigt.

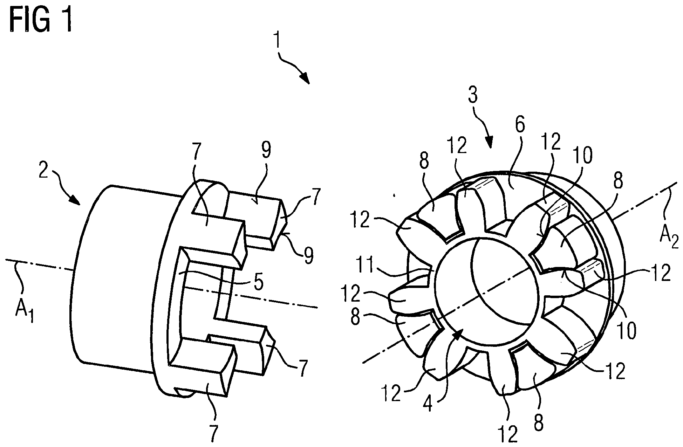

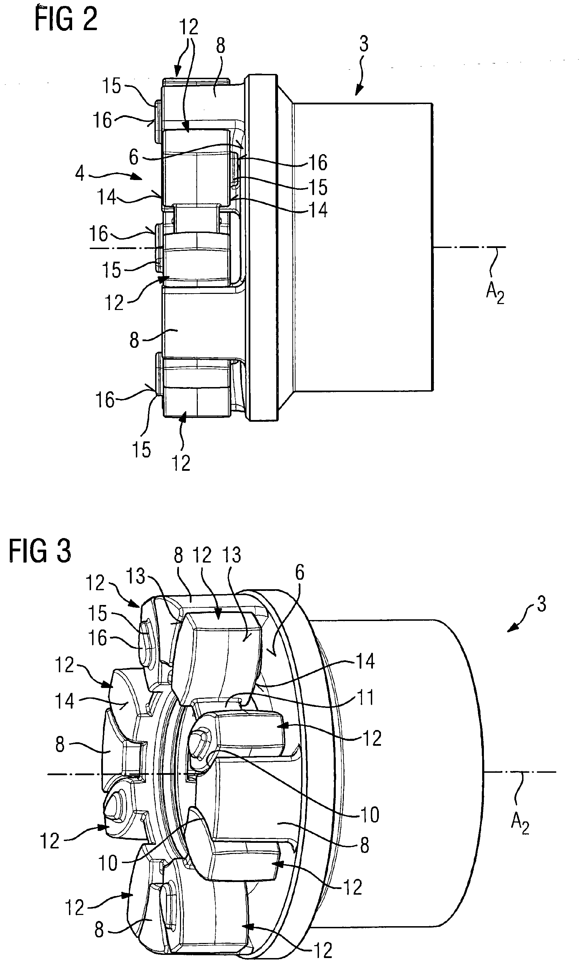

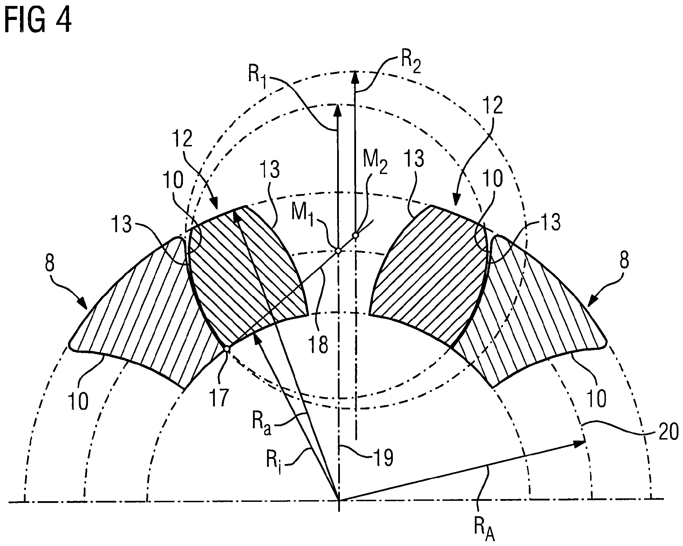

Die Figuren 1 bis 4 zeigen eine Klauenkupplung 1 gemäß einer Ausführungsform der vorliegenden Erfindung bzw. Komponenten derselben. Die Klauenkupplung 1 dient zur Übertragung eines Drehmomentes zwischen zwei miteinander fluchtenden Wellen und umfasst als Hauptkomponenten zwei im bestimmungsgemäß montierten Zustand axial einander gegenüberangeordnete Kupplungselemente 2, 3 mit fluchtenden Längsachsen A1, A2, sowie eine zwischen diesen angeordnete Druckkörperanordnung 4.

Die beiden Kupplungselemente 2 und 3, bei denen es sich um Gusskörper handelt, weisen einander zugewandte Stirnflächen 5 und 6 auf, von denen wechselweise ineinandergreifende Klauen 7 und 8 vorstehen, die jeweils auf einander entsprechenden Kreisringen angeordnet sind, wobei jedes Kupplungselement 2, 3 vorliegend vier Klauen 7, 8 aufweist. Dabei definieren jeweils benachbart angeordnete Klauen 7 und 8 der Kupplungselemente 2 und 3 zwischen sich einen Aufnahmeraum, der von einander zugewandten konkav gewölbten Klauenflächen 9 und 10 der Klauen 7 und 8 der Kupplungselemente 2 und 3 in Umfangsrichtung begrenzt ist. Bei den Klauenflächen 9 und 10 handelt es sich um gegossene Flächen, die mechanisch nicht nachbearbeitet sind.

Die Druckkörperanordnung 4 ist aus elastischem Material hergestellt und umfasst ein Ringelement 11 sowie acht radial auswärts von dem Ringelement 11 vorstehende Druckkörper 12, wobei das Ringelement 11 und die Druckkörper 12 vorliegend einteilig ausgebildet sind. Die Druckkörper 12 umfassen Druckkörperflächen 13, die konvex gewölbt sind. Jeder Druckkörper 12 ist an einer seiner gegenüberliegenden Stirnflächen 14 mit einem axial vorstehenden Abstandshalter 15 versehen, der eine Anlagefläche 16 definiert, wobei die Abstandshalter 15 benachbarter Druckkörper 12 jeweils axial in entgegengesetzten Richtungen vorstehen.

Die konkav gekrümmten Klauenflächen 10 und 11 der Klauen 7 und 8 der Kupplungselemente 2 und 3 weisen jeweils eine Krümmung auf, die einer ersten Kreisbahn mit einem ersten Radius R1 folgt. Die konvex gekrümmten Druckkörperflächen weisen eine Krümmung auf, die jeweils einer zweiten Kreisbahn mit einem zweiten Radius R2 folgt, wobei der zweite Radius R2 der zweiten Kreisbahn kleiner ist als der erste Radius R1 der ersten Kreisbahn. Dabei tangieren jeweils der Radius R1 der ersten Kreisbahn einer Klauenfläche 9 und der Radius R2 der zweiten Kreisbahn einer mit dieser Klauenfläche 9 in Eingriff stehenden Druckkörperfläche 13 am radial innersten Punkt 17 der Klauenfläche 9 einander. Ferner ist dieser radial innerste Punkt 17 der Klauenfläche 9 auf einer gemeinsamen Geraden 18 mit dem Mittelpunkt M1 der ersten Kreisbahn und dem Mittelpunkt M2 der zweiten Kreisbahn angeordnet. Der Mittelpunkt M2 der zweiten Kreisbahn ist dabei auf einer radialen Mittellinie 19 des Ringelementes 11 positioniert, und zwar im Kreuzungspunkt der radialen Mittellinie 19 des Ringelementes 11 und eines mittleren Teilkreises 20 der Klauen 8. Der Radius Rt des mittleren Teilkreises ist dabei definiert als die Hälfte der Summe des Klauenaußenradius Ra und des Klaueninnenradius Ri, also Rt = 0,5 (Ra + Ri). Des Weiteren sind die Krümmungen von einander abgewandten Druckkörperflächen 13 benachbarter Druckkörper 12 auf einer gemeinsamen Kreisbahn angeordnet.

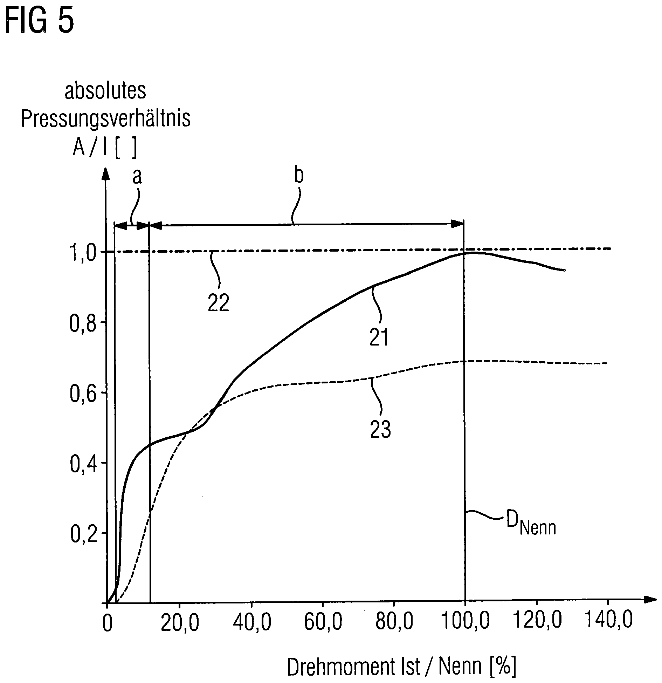

Während des Betriebs der Klauenkupplung 1 wird zwischen den Kupplungselementen 2 und 3 über die Druckkörperanordnung 4 ein Drehmoment übertragen. Während bei geringem Drehmoment aufgrund der zuvor beschriebenen spezifischen geometrischen Ausbildung der Klauenflächen 9, 10 der Klauen 7, 8 und der Druckkörperflächen 13 ein sichelförmiger Spalt mit radial auswärts konstant zunehmendem Spaltmaß verbleibt, legen sich die Druckkörperflächen 13 nach Erreichen von etwa 5% des Nenn-Drehmomentes vollständig an die zugeordneten Klauenflächen 9, 10 an, so dass das absolute Pressungsverhältnis A/I zwischen einem radial außen liegenden Punkt A und einem radial innen liegenden Punkt I der jeweiligen Druckkörperflächen sprunghaft ansteigt, siehe hierzu Abschnitt a der Kurve 21 in Figur 5, die den Verlauf des absoluten Pressungsverhältnisses bezogen auf das mit der erfindungsgemäßen Klauenkupplung 1 übertragene Drehmoment repräsentiert. Mit weiter zunehmendem Drehmoment steigt das absolute Pressungsverhältnis im Abschnitt b mit geringerer Steigung weiter an, da die zwischen den Klauenflächen 9, 10 und den Druckkörperflächen 13 Kräfte radial außen zunehmen, was durch die Tatsache unterstützt wird, dass zwischen den gießtechnisch hergestellten Klauenflächen 9, 10 und den Druckkörperflächen 13 eine sehr gute Haftreibung vorhanden ist. Ferner werden die Druckkörper 12 mit zunehmenden Drehmoment derart verformt, dass sich ihre Stirnflächen 14 ausbauchen, so dass die Anlageflächen 16 der Abstandshalter 15 unter Erzeugung einer zunehmenden Haftkraft gegen die Stirnflächen 5, 6 der Kupplungselemente 2, 3 gedrückt werden. Bei Erreichen des Nenn-Drehmomentes D_{Nenn} nimmt das Pressungsverhältnis D_{Nenn} dann etwa den Wert 1 ein, der durch die Gerade 22 gekennzeichnet ist. Mit anderen Worten heben bei Erreichen des Nenn-Drehmomentes D_{Nenn} radial einwärts und radial auswärts auf das Ringelement 11 wirkende Kräfte einander auf, so dass das Ringelement nicht verformt wird.

Die Kurve 23 zeigt den Verlauf des Pressungsverhältnisses bei zunehmendem Drehmoment einer herkömmlichen Klauenkupplung. Bei einem Vergleich der Kurven 21 und 23 wird der Vorteil der erfindungsgemäßen Ausbildung der Klauenkupplung 1 gegenüber einer herkömmlichen Klauenkupplung deutlich, der zum Großteil auf die zuvor beschriebenen spezifischen geometrischen Parameter der Anordnung und Krümmung der Klauen- und Druckkörperflächen zurückzuführen ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den durch die Patentansprüche bestimmten Schutzumfang der Erfindung zu verlassen. So kann beispielsweise die Anzahl von Klauen und Druckkörpern variieren, um nur ein Beispiel zu nennen. Auch sind Anzahl und Positionierung der Abstandshalter variabel.

## Patentansprüche

1. Klauenkupplung (1) umfassend zwei axial einander gegenüber angeordnete Kupplungselemente (2, 3), die einander zugewandte Stirnflächen (5, 6) aufweisen, von denen jeweils wechselweise ineinander greifende Klauen (7, 8) vorstehen, die auf einander entsprechenden Kreisringen angeordnet sind und einander zugewandte, konkav gekrümmte Klauenflächen (9, 10) aufweisen, wobei die Krümmung der Klauenflächen (9, 10) jeweils einer ersten Kreisbahn mit einem ersten Radius (R1) folgt, und eine zwischen den Kupplungselementen (2, 3) angeordnete, aus elastischem Material hergestellte Druckkörperanordnung (4) mit einem Ringelement (11) sowie radial auswärts von dem Ringelement (11) vorstehenden Druckkörpern (12), die jeweils zwischen einer Klaue (7) des ersten Kupplungselementes (2) und einer Klaue (8) des zweiten Kupplungselementes (3) aufgenommen sind und konvex gekrümmte Druckkörperflächen (13) aufweisen, die während einer Drehmomentübertragung mit Klauenflächen (9, 10) der Klauen (7, 8) in Eingriff sind, wobei die Krümmung der Druckkörperflächen (13) jeweils einer zweiten Kreisbahn mit einem zweiten Radius (R2) folgt, der kleiner ist als der erste Radius (R1) der ersten Kreisbahn, **dadurch gekennzeichnet, dass** jeweils der Radius (R1) der ersten Kreisbahn einer Klauenfläche (9, 10) und der Radius (R2) der zweiten Kreisbahn einer mit dieser Klauenfläche (9, 10) in Eingriff stehenden Druckkörperfläche (13) am radial innersten Punkt (17) der Klauenfläche (9, 10) einander tangieren, und dass dieser radial innerste Punkt (17) der Klauenfläche (9, 10) auf einer gemeinsamen Geraden (18) mit dem Mittelpunkt (M1) der ersten Kreisbahn und dem Mittelpunkt (M2) der zweiten Kreisbahn angeordnet ist.

2. Klauenkupplung (1) nach Anspruch 1, **dadurch gekennzeichnet, dass** der Mittelpunkt (M2) der zweiten Kreisbahn auf einer radialen Mittellinie (19) des Ringelements (11) angeordnet ist, insbesondere im Kreuzungspunkt der radialen Mittellinie (19) des Ringelementes (11) und eines mittleren Teilkreises (20) der Klauen (7, 8).

3. Klauenkupplung (1) nach einem der vorhergehenden Ansprüche, **dadurch gekennzeichnet, dass** die Krümmungen von einander abgewandten Druckkörperflächen (13) benachbarter Druckkörper (12) auf einer gemeinsamen Kreisbahn angeordnet sind.

4. Klauenkupplung (1) nach einem der vorhergehenden Ansprüche, **dadurch gekennzeichnet, dass** zumindest einige der Druckkörper (12) mit wenigstens einem axial vorstehenden Abstandshalter (15) versehen sind, wobei jeder Abstandshalter (15) eine Anlagefläche (16) aufweist, die bei Übertragung eines Drehmomentes mit einer Stirnfläche (5, 6) eines Kupplungselementes (2, 3) in Eingriff ist.

5. Klauenkupplung (1) nach Anspruch 4, **dadurch gekennzeichnet, dass** jeder Druckkörper (12) mit zumindest einem Abstandshalter (15) versehen ist.

6. Klauenkupplung (1) nach Anspruch 5, **dadurch gekennzeichnet, dass** Abstandshalter (15) benachbarter Druckkörper (12) axial in entgegen gesetzten Richtungen vorstehen.

7. Klauenkupplung (1) nach Anspruch 5 oder 6, **dadurch gekennzeichnet, dass** jeder Druckkörper (12) mit zumindest zwei Abstandshaltern (15) versehen ist, die in entgegengesetzten Richtungen vorstehen.

8. Klauenkupplung (1) nach einem der vorhergehenden Ansprüche, **dadurch gekennzeichnet, dass** es sich bei den Klauenflächen (9, 10) um gießtechnisch hergestellte Flächen handelt.

## Claims

1. Claw coupling (1) comprising two coupling elements (2, 3) disposed axially opposite one another, having end face surfaces (5, 6) facing towards one another, from which claws (7, 8) engaging alternately into one another project, which are disposed on circular rings corresponding to one another and have concave curved claw surfaces (9, 10) facing towards one another, wherein the curvature of the claw surfaces (9, 10) in each case follows first circular track with a first radius (R₁), and a pressure body arrangement (4) disposed between the coupling elements (2, 3), made of elastic material with a ring element (11) as well as pressure bodies (12) projecting radially outwards from the ring element (11), which are each received between a claw (7) of the first coupling element (2) and a claw (8) of the second coupling element (3) and have convex curved pressure body surfaces (13), which engage during a torque transmission with claw surfaces (9, 10) of the claws (7, 8), wherein the curvature of the pressure body surfaces (13) in each case follows a second circular track with a second radius (R₂) that is smaller than the first radius (R₁) of the first circular track, **characterised in that** in each case the radius (R₁) of the first circular track of a claw surface (9, 10) and the radius (R₂) of the second circular track of a pressure body surface (13) engaging with this claw surface (9, 10) touch one another at the radially innermost point (17) of the claw surface (9, 10), and that this radially innermost point (17) of the claw surface (9, 10) is disposed on a common straight line (18) with the centre point (M₁) of the first circular track and the centre point (M₂) of the second circular track.

2. Claw coupling (1) according to claim 1, **characterised in that** the centre point (M₂) of the second circular track is disposed on a radial centre line (19) of the ring element (11), especially at the intersection point of the radial centre line (19) of the ring element (11) and a centre pitch circle (20) of the claws (7, 8).

3. Claw coupling (1) according to one of the preceding claims, **characterised in that** the curvatures of pressure body surfaces (13) of neighbouring pressure bodies (12) facing away from one another are disposed on a common circular track.

4. Claw coupling (1) according to one of the preceding claims, **characterised in that** at least a few of the pressure bodies (12) are provided with at least one axially projecting spacer (15), wherein each spacer (15) has a contact surface (16), which engages with an end face surface (5, 6) of a coupling element (2, 3) when a torque is being transmitted.

5. Claw coupling (1) according to claim 4, **characterised in that** each pressure body (12) is provided with at least one spacer (15).

6. Claw coupling (1) according to claim 5, **characterised in that** pressure bodies (12) adjacent to spacers (15) project axially in opposite directions.

7. Claw coupling (1) according to claim 5 or 6, **characterised in that** each pressure body (12) is provided with at least two spacers (15), which project in opposite directions.

8. Claw coupling (1) according to one of the preceding claims, **characterised in that** the claw surfaces (9, 10) involve surfaces manufactured using casting technology.

## Revendications

1. Embrayage ( 1 ) à crabot comprenant deux éléments ( 2, 3 ) d'embrayage, qui sont montés axialement l'un par rapport à l'autre et qui ont des faces ( 5, 6 ) frontales tournées l'une vers l'autre, dont font saillie des crabots ( 7, 8 ) s'interpénétrant réciproquement, disposés sur des anneaux circulaires se correspondant et ayant des faces ( 9, 10 ) de crabot courbées de manière concave tournées l'une vers l'autre, dans lequel la courbure des faces ( 9, 10 ) de crabot suit une première orbite circulaire ayant un premier rayon ( R1 ), et un agencement ( 4 ), en un matériau élastique, disposé entre les éléments ( 2, 3 ) de l'embrayage, ayant un élément ( 11 ) annulaire ainsi que des pièces ( 12 ) d'application d'une pression, en saillie vers l'extérieur et radialement de l'élément ( 11 ) annulaire, pièces qui sont reçues respectivement entre un crabot ( 7 ) du premier élément ( 2 ) de l'embrayage et un crabot ( 8 ) du deuxième élément ( 3 ) de l'embrayage et qui ont des faces ( 13 ) de pièces d'application d'une pression courbées de façon convexe, surfaces qui, pendant une transmission de couple de rotation, sont en prise avec des faces ( 9, 10 ) des crabots ( 7, 8 ), les courbures des faces ( 13 ) des pièces d'application d'une pression suivant une deuxième orbite circulaire ayant un deuxième rayon ( R2 ), qui est plus petit que le premier rayon ( R1 ) de la première orbite circulaire, **caractérisé en ce que** le rayon ( R1 ) de la première orbite d'une face ( 9, 10 ) de crabot et le rayon ( R2 ) de la deuxième orbite circulaire d'une face ( 13 ) d'une pièce d'application d'une pression en prise avec cette face ( 9, 10 ) de crabot, sont tangents l'un à l'autre au point ( 17 ) le plus intérieur radialement de la face ( 9, 10 ) de crabot et **en ce que** ce point ( 17 ) le plus intérieur radialement de la face ( 9, 10 ) de crabot est sur une droite ( 18 ) commune avec le centre ( M1 ) de la première orbite et le centre ( M2 ) de la deuxième orbite.

2. Embrayage ( 1 ) à crabot suivant la revendication 1, **caractérisé en ce que** le centre ( M2 ) de la deuxième orbite est sur une ligne ( 19 ) médiane radiale de l'élément ( 11 ) annulaire, notamment au point d'intersection de la ligne ( 19 ) médiane radiale de l'élément ( 11 ) annulaire et d'un cercle ( 20 ) partiel médian des crabots ( 7, 8 ).

3. Embrayage ( 1 ) à crabot suivant l'une des revendications précédentes, **caractérisé en ce que** les courbures de faces ( 13 ), éloignées l'une de l'autre, de pièces ( 12 ) d'application d'une pression voisines, sont sur une orbite commune.

4. Embrayage ( 1 ) à crabot suivant l'une des revendications précédentes, **caractérisé en ce qu'**au moins certaines des pièces ( 12 ) d'application d'une pression sont pourvues d'au moins une entretoise ( 15 ) en saillie axialement, chaque entretoise ( 15 ) ayant une face ( 16 ) d'application, qui, lors de la transmission d'un couple de rotation, est en prise avec une face ( 5, 6 ) avant d'un élément ( 2, 3 ) de l'embrayage.

5. Embrayage ( 1 ) à crabot suivant la revendication 4, **caractérisé en ce que** chaque pièce ( 12 ) d'application d'une pression est pourvue d'au moins une entretoise ( 15 ).

6. Embrayage ( 1 ) à crabot suivant la revendication 5, **caractérisé en ce que** des entretoises ( 15 ) de pièces ( 12 ) d'application d'une pression voisines sont en saillie axialement dans des sens contraires.

7. Embrayage ( 1 ) à crabot suivant la revendication 5 ou 6, **caractérisé en ce que** chaque pièce ( 12 ) d'application d'une pression est pourvue d'au moins deux entretoises ( 15 ), qui sont en saillie dans des sens contraires.

8. Embrayage ( 1 ) à crabot suivant l'une des revendications précédentes, **caractérisé en ce que** les faces ( 9, 10 ) de crabot sont des faces préparées par une technique de coulée.
